# EUROPÄISCHE PATENTSCHRIFT

(11) **EP 2 392 393 B1**
(45) Veröffentlichungstag und Bekanntmachung des Hinweises auf die Patenterteilung: **27.03.2019**
(21) Anmeldenummer: 10005796.7
(22) Anmeldetag: 04.06.2010
(51) Int. Cl.: B01D 45/12, B04C 5/085, F27D 1/14

(54) **FLIEHKRAFTABSCHEIDER ZUR REINIGUNG EINES GASSTROMES VON MITGEFÜHRTEN FREMDSTOFFEN**
CENTRIFUGAL SEPARATOR FOR CLEANING ACCOMPANYING FOREIGN PARTICLES IN A FLOW OF GAS
SÉPARATEUR CENTRIFUGE DESTINÉ À SUPPRIMER DES CORPS ÉTRANGERS TRANSPORTÉS DANS UN FLUX DE GAZ

(43) Veröffentlichungstag der Anmeldung: 07.12.2011
(73) Patentinhaber: aixprocess GmbH, 52070 Aachen (DE)
(72) Erfinder: Weng, Martin, 52070 Aachen (DE); Hohendorf, Michael, 52072 Aachen (DE); Schumacher, Matthias, 52064 Aachen (DE)
(74) Vertreter: Hohendorf, Carsten

(56) Entgegenhaltungen:
- WO-A1-92/04983
- WO-A1-97/03322

## Beschreibung

Die Erfindung betrifft einen Fliehkraftabscheider zur Reinigung eines Gasstromes von mitgeführten Fremdstoffen, umfassend eine Eintrittsöffnung, zur Einleitung des zu reinigenden Gasstromes, eine Austrittsöffnung, zur Ableitung des gereinigten Gasstromes, eine Entnahmeöffnung für die aus dem Gasstrom abgetrennten Fremdstoffe, und ein Verschleißhemd. welches im Inneren des Fliehkraftabscheiders so angeordnet ist, dass es zumindest teilweise die Innenwandung des Fliehkraftabscheiders vor Beschädigungen durch die im Gasstrom enthaltenen Fremdstoffe schützt.

Fliehkraftabscheider, auch Zyklon, Zyklonabscheider oder Zyklonfilter genannt, werden zur Absonderung von in Fluiden, insbesondere Gasen, enthaltenen festen oder flüssigen dispersen Fremdstoffen (Partikeln) eingesetzt, beispielsweise bei der Reinigung eines Abgasstromes von Staubpartikeln. Aus dem Stand der Technik bekannte Fliehkraftabscheider weisen einen im Wesentlichen runden Querschnitt auf und sind im oberen Bereich zylindrisch und im unteren Bereich konisch zum unteren Ende zulaufend ausgebildet.

Der zu reinigende Gasstrom wird durch eine Eintrittsöffnung im oberen Bereich des Fliehkraftabscheiders in etwa tangential zum runden Querschnitt oder axial über angestellte Leitschaufeln in den Fliehkraftabscheider eingeleitet, wodurch ein sich schnell drehender Wirbel erzeugt wird. Infolge des physikalischen Grundprinzips der Drallerhaltung nimmt die Drehgeschwindigkeit in Richtung der Achse des Fliehkraftabscheiders zu, so dass die Partikel durch die Fliehkraft an die Innenwandung des Fliehkraftabscheiders geschleudert werden und nachfolgend über den konischen Bereich in einen Partikelauffangbehälter, auch als Bunker bezeichnet, sinken. Das Gas verlässt den Fliehkraftabscheider über eine Austrittsöffnung, die mittig im Fliehkraftabscheider in Form eines Tauchrohrs ausgebildet ist.

Um zu vermeiden, dass der Wirbel Partikel aus dem Bunker wieder herausreißt, kann der Übergang vom konischen Bereich zum Bunker durch einen mittigen Apexkegel so verschlossen werden, dass lediglich ein ringförmiger Schlitz zwischen der Innenwandung des Fliehkraftabscheiders und dem Apexkegel bleibt, durch welchen die Partikel in den Auffangbehälter gelangen.

Der Auffangbehälter kann vorteilhafterweise während des Betriebs geleert werde, wobei der Austrag zur Vermeidung eines Gasaustauschs mit der Umgebung über eine Schleuse erfolgen kann.

Die hohen Gasgeschwindigkeiten innerhalb des Fliehkraftabscheiders in Verbindung mit ungünstigen Materialeigenschaften der Partikel können zu einem abrasiven Verschleiß (Erosionsverschleiß) an der Fliehkraftabscheiderwandung führen. Durch diesen abrasiven Verschleiß muss das Fliehkraftabscheidergehäuse in regelmäßigen Abständen erneuert werden.

Aus dem Stand der Technik ist es bekannt, ein so genanntes Verschleißhemd aus gehärtetem oder oberflächenbehandeltem Material zumindest teilweise so innerhalb des Fliehkraftabscheiders anzuordnen, dass dieses an den am stärksten beanspruchten Bereichen die Fliehkraftabscheiderwandung vor dem abrasiven Verschleiß schützt. Solch ein Verschleißhemd hat zum einen den Vorteil, dass es leicht ausgewechselt werden kann und zum anderen, dass es aus einem widerstandsfähigerem Material gefertigt ist. Die Kosten eines solchen Verschleißhemdes liegen deutlich unter den Kosten eines Neubaus des Fliehkraftabscheiders.

Nach dem Stand der Technik ist das Verschleißhemd im oberen Bereich mittels eines Flansches mit dem Fliehkraftabscheidergehäuse starr verbunden und im konischen unteren Bereich mittels Fixierbolzen abgestützt und zentriert. Durch die Abstützung mittels Fixierbolzen werden Schwingungen des Verschleißhemdes reduziert.

Weiterhin sind aus dem Stand der Technik Fliehkraftabscheider bekannt, die über die gesamte Höhe zylindrisch ausgebildet sind. Diese werden beispielsweise zur Abtrennung von Flüssigkeitstropfen aus einem Gasstrom eingesetzt. Des Weiteren sind Fliehkraftabscheider bekannt, bei denen sich an den konischen Bereich ein weiterer zylindrischer zur Abführung der abgetrennten Partikel anschließt.

Aus der WO 92/04983 ist ein Fliehkraftabscheider mit einem darin angeordneten Verschleißhemd bekannt. Das Verschleißhemd kann dabei aus mehreren Teilen bestehen. Die Teile des Verschleißhemdes sind beweglich auf Bolzen der Wandung des Fliehkraftabscheiders gelagert, so dass sich die Teile des Verschleißhemdes durch eine wärmebedingte Größenänderung relativ zu der Innenwandung des Fliehkraftabscheiders in einer vertikalen Richtung bewegen können.

Die WO 97/03322 offenbarte einen Fliehkraftabscheider mit einem an der Decke aufgehängtem Verschleißhemd.

Die aus dem Stand der Technik bekannten Fliehkraftabscheider mit eingebautem Verschleißhemd weisen jedoch den Nachteil aus, dass bestimmte Bereiche des Verschleißhemdes stärker durch abrasiven Verschleiß beansprucht werden als andere. Die lokale Beanspruchung des Verschleißhemdes führt zu einer frühzeitigen Instandsetzung/Erneuerung des Verschleißhemdes, obwohl die überwiegenden Bereiche des Verschleißhemdes kaum Verschleißerscheinungen aufweisen.

Der Erfindung liegt die Aufgabe zugrunde die Betriebsdauer eines aus dem Stand der Technik bekannten Fliehkraftabscheiders mit eingebautem Verschleißhemd zu verbessern, insbesondere durch eine Reduzierung des abrasiven Verschleißes an hoch beanspruchten Bereichen des Verschleißhemdes.

Es wurden bei der Reinigung von Gasströmen mit hohen Temperaturen (>200°C) eine horizontale und vertikale Ausdehnung des Innenhemdes beobachtet. Diese Wärmeausdehnung des Verschleißhemdes wird jedoch am oberen Flansch und im Bereich der Fixierbolzen im unteren konischen Bereich des Fliehkraftabscheiders behindert. Weiterhin wird die Wärmeausdehnung des Verschleißhemdes durch die Wandung des Fliehkraftabscheidergehäuses behindert, da sich dieses aufgrund deutlich niedriger Temperaturen weniger ausdehnt. Diese Wärmeausdehnung des Verschleißhemdes führt zu einer unkontrollierten Verformung des Verschleißhemdes, insbesondere im Bereich des Übergangs zwischen zylindrischem und konischem Bereich, wo diese miteinander verschweißt sind. Erfindungsgemäß wurde herausgefunden, dass sich insbesondere in diesem Bereich das Verschleißhemd in den Strömungsbereich biegt, was in Verbindung mit dem durch die Schweißnaht geschwächten Material zu einem verstärkten abrasiven Verschleiß führt.

Erfindungsgemäß wird die lokale Beanspruchung des Verschleißhemdes verringert durch einen Fliehkraftabscheider zur Reinigung eines Gasstromes von mitgeführten Fremdstoffen, umfassend eine Eintrittsöffnung, zur Einleitung des zu reinigenden Gasstromes, eine Austrittsöffnung, zur Ableitung des gereinigten Gasstromes, eine Entnahmeöffnung für die aus dem Gasstrom abgetrennten Fremdstoffe, und ein Verschleißhemd, welches im Inneren des Fliehkraftabscheiders so angeordnet ist, dass es zumindest teilweise die Innenwandung des Fliehkraftabscheiders vor Beschädigungen durch die im Gasstrom enthaltenen Fremdstoffe schützt, wobei zwischen der Innenwandung des Fliehkraftabscheiders und des Verschleißhemdes wenigstens ein Dämpfungsmittel angeordnet ist, wobei das Dämpfungsmittel Relativbewegungen zwischen der Innenwandung des Fliehkraftabscheiders und dem Verschleißhemd ausgleicht.

Der erfindungsgemäße Fliehkraftabscheider hat den Vorteil, dass sich das Verschleißhemd innerhalb des Fliehkraftabscheiders ausdehnen kann, ohne dass es zu Verformungen kommt. Dadurch wird verhindert, dass sich Bereiche des Verschleißhemdes so verformen, dass diese in den Gasstrom hineinragen und einem dadurch verursachten erhöhten abrasiven Verschleiß unterliegen.

Nach einer bevorzugten Ausführungsform der Erfindung ist das Verschleißhemd in einem oberen Bereich zur Positionierung und/oder Halterung fest mit der Innenwandung des Fliehkraftabscheiders verbunden und in einem unteren Bereich mittels des Dämpfungsmittels gehaltert. Durch die Halterung mittels des Dämpfungsmittels kann gleichzeitig eine Zentrierung erreicht werden. Weiterhin wird dadurch die Anzahl der benötigten Dämpfungsmittel reduziert, da lediglich im unteren Bereich Dämpfungsmittel angeordnet sind.

Nach einer weiteren bevorzugten Ausführungsform der Erfindung ist das Verschleißhemd mittels des Dämpfungsmittels in dem Fliehkraftabscheider zentriert. Dadurch wird erreicht, dass sich das Verschleißhemd in alle Richtungen gleichmäßig ausdehnen kann, ohne verformt zu werden.

Erfindungsgemäß ist das Dämpfungsmittel als Federelement ausgebildet. Federelemente weisen eine einfach zu bestimmende Dämpfung auf, sind kostengünstig und einfach zu montieren.

Besonders bevorzugt besteht das Federelement aus Federstahl. Federstahl ist robust, lässt sich einfach an einer metallischen Wandung des Fliehkraftabscheiders oder des Verschleißhemdes befestigen und ist kostengünstig.

Nach einer weiteren zweckmäßigen Ausgestaltung der Erfindung ist das Federelement mehrteilig ausgebildet, vorzugsweise zweiteilig.

Vorzugsweise ist ein erster Teil des Federelements an der Innenwandung des Fliehkraftabscheiders angeordnet und ein zweiter Teil des Federelements an dem Verschleißhemd angeordnet, wobei das erste und zweite Federelement im eingebauten Zustand zusammenwirken. Dadurch wird eine Zentrierung des Verschleißhemdes innerhalb des Fliehkraftabscheiders auf einfache Art und Weise erreicht.

Nach einer besonders bevorzugten Ausführungsform ist wenigstens ein Teil des Federelements kammartig ausgebildet und wirkt mit wenigstens einem Vorsprung des anderen Teils des Federelements im eingebauten Zustand zusammen. Solche kammartigen Strukturen sind einfach herzustellen, insbesondere aus Federstahl, und sind sehr robust.

Nach einer alternativen Ausführungsform ist das einteilig ausgebildet Federelement als gekrümmte Zahnscheibe ausgebildet, vorzugsweise als halbkugelförmige Zahnscheibe. Ein solches Federelement ist beispielsweise aus einer Zahnscheibe herstellbar, bei welcher die Zähne so gebogen werden, dass das Federelement vorzugsweise eine halbkugelförmige Form aufweist. Dies hat die Vorteile, dass das Federelement einfach herstellbar ist, sehr robust ist und einfach montierbar ist, insbesondere muss ein solches Federelement nur an der Wandung des Fliehkraftabscheiders oder des Verschleißhemdes befestigt werden.

Nachfolgend wird die Erfindung anhand von den Figuren dargestellten Ausführungsbeispielen näher erläutert. Es zeigen:
- Fig. 1: eine Schnittansicht eines ersten erfindungsgemäßen Fliehkraftabscheiders,
- Fig. 2: eine Schnittansicht eines zweiten erfindungsgemäßen Fliehkraftabscheiders,
- Fig. 3: eine Schnittansicht eines dritten erfindungsgemäßen Fliehkraftabscheiders,
- Fig. 4: eine Schnittansicht eines vierten erfindungsgemäßen Fliehkraftabscheiders,
- Fig. 5a, 5b: Detailansichten des Dämpfungsmittels nach Fig. 4. und
- Fig. 6a, 6b: Detailansichten des Dämpfungsmittels nach Fig. 3.

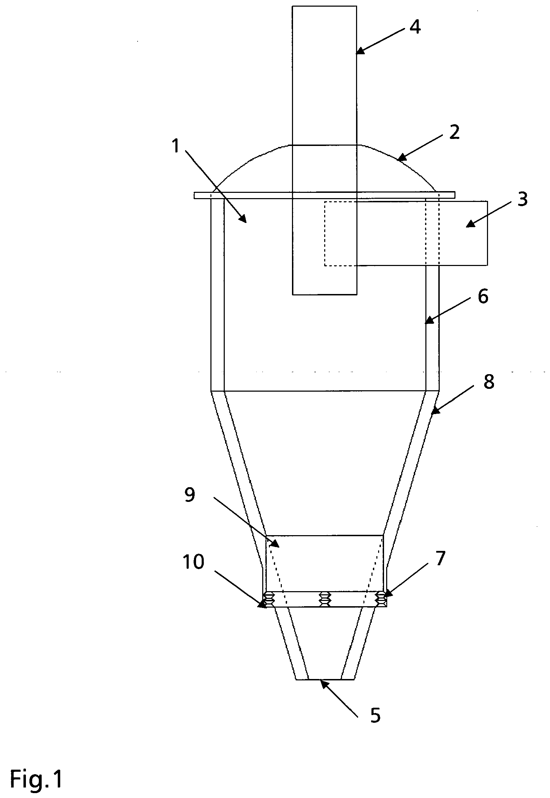

In Fig. 1 ist eine Schnittansicht eines ersten Fliehkraftabscheiders 1. Der Fliehkraftabscheider 1 umfasst ein Gehäuse 2 mit einer Eintrittsöffnung 3, zur Einleitung eines zu reinigenden Gasstroms, eine Austrittsöffnung 4. zur Ableitung des gereinigten Gasstroms, eine Entnahmeöffnung 5 für die aus dem Gasstrom abgetrennten Fremdstoffe, und ein Verschleißhemd 6, welches im Inneren des Fliehkraftabscheiders 1 so angeordnet ist, dass es zumindest teilweise die Innenwandung des Gehäuses 2 des Fliehkraftabscheiders 1 vor Beschädigungen durch die im Gasstrom enthaltenen Fremdstoffe schützt. Zwischen der Innenwandung des Gehäuses 2 des Fliehkraftabscheiders 1 und dem Verschleißhemd 6 ist wenigstens ein Dämpfungsmittel 7 angeordnet, wobei das Dämpfungsmittel 7 Relativbewegungen zwischen der Innenwandung des Gehäuses 2 des Fliehkraftabscheiders 1 und dem Verschleißhemd 6 ausgleicht. Dies hat den Vorteil, dass sich das Verschleißhemd 6 innerhalb des Fliehkraftabscheiders 1 ausdehnen kann, ohne dass es zu Verformungen kommt. Dadurch wird verhindert, dass sich Bereiche des Verschleißhemdes 6 so verformen, dass diese in den Gasstrom hineinragen und einem dadurch verursachten erhöhten abrasiven Verschleiß unterliegen.

Das Verschleißhemd 6 ist in einem oberen Bereich fest mit der Innenwand des Gehäuses 2 des Fliehkraftabscheiders 1 verbunden, wodurch eine Halterung und/oder Positionierung erreicht wird. In einem unteren Bereich ist das Verschleißhemd 6 mittels der Dämpfungsmittel 7 innerhalb des Gehäuses 2 des Fliehkraftabscheiders 1 gehaltert.

Die Dämpfungsmittel 7 zentrieren dabei das Verschleißhemd 6 innerhalb des Gehäuses des Fliehkraftabscheiders 1.

Der zu reinigende Gasstrom wird durch die Eintrittsöffnung 3 im oberen Bereich des Fliehkraftabscheiders 1 in etwa tangential zum runden Querschnitt in den Fliehkraftabscheider 1 eingeleitet, wodurch ein sich schnell drehender Wirbel erzeugt wird. Die im Gasstrom enthaltenen Partikel werden durch die wirbelinduzierte Fliehkraft an die Innenwandung des Fliehkraftabscheiders 1 geschleudert und gelangen nachfolgend über den konischen Bereich 8 zur Austrittsöffnung 5 des Fliehkraftabscheiders 1. Das Gas verlässt den Fliehkraftabscheider 1 über eine Austrittsöffnung 4, die mittig im Fliehkraftabscheider 1 in Form eines Tauchrohrs ausgebildet ist.

Die Dämpfungsmittel 7 sind mittels einer am Verschleißhemd 6 montierten Halteplatte 9 zwischen Einsatzbereichen 10 des Gehäuses 2 des Fliehkraftabscheiders 1 und dem Verschleißhemd angeordnet. Die Halteplatte 9 ist dabei kreisrund ausgebildet und ist vollumfänglich mit dem Verschleißhemd 6 verbunden. Es ist jedoch auch möglich für jedes Dämpfungsmittel 7 eine eigene Halteplatte 9 vorzusehen, die jeweils nur in dem Bereich des Dämpfungsmittels 7 mit dem Verschleißhemd 6 verbunden ist. In dem Fall kann der Fliehkraftabscheider 1 für jedes Dämpfungselement 7 einen separaten Einsatzbereich 10 aufweisen.

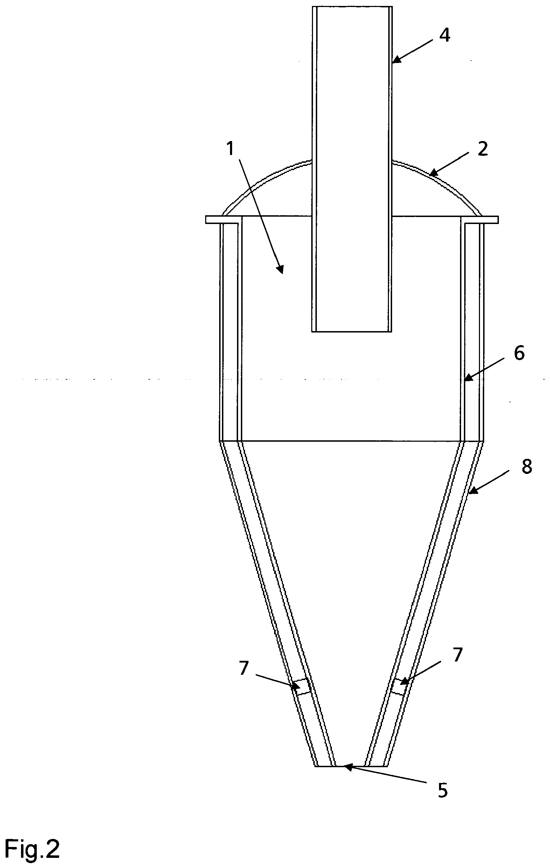

Fig. 2 zeigt eine Schnittansicht eines zweiten erfindungsgemäßen Fliehkraftabscheiders 1. Der Fliehkraftabscheider 1 nach Fig. 2 weist ebenfalls wie der in Fig. 1 dargestellte Fliehkraftabscheider 1 ein Gehäuse 2 mit einer Eintrittsöffnung 3, einer Austrittsöffnung 4, einer Entnahmeöffnung 5 und einem darin angeordnetem Verschleißhemd 6 auf. Der Fliehkraftabscheider 1 nach Fig .1 unterscheidet sich von dem Fliehkraftabscheider 1 nach Fig. 1 jedoch hinsichtlich der Dämpfungsmittel 7, die nach Fig. 2 als Federelemente ausgebildet sind. Die Federelemente können zum Schutz vor Feuchtigkeit und/oder Verschmutzungen mit einem Kunststoff beschichtet sein oder in einer flexiblen Kunststoffhülle angeordnet sein. Vorzugsweise sind die Federelemente mit dem Verschleißhemd 6 und/oder der Innenwandung des Gehäuses 2 des Fliehkraftabscheiders 1 verbunden, wodurch die Halteplatte 9 und/oder die Einsatzbereiche 10 entfallen können.

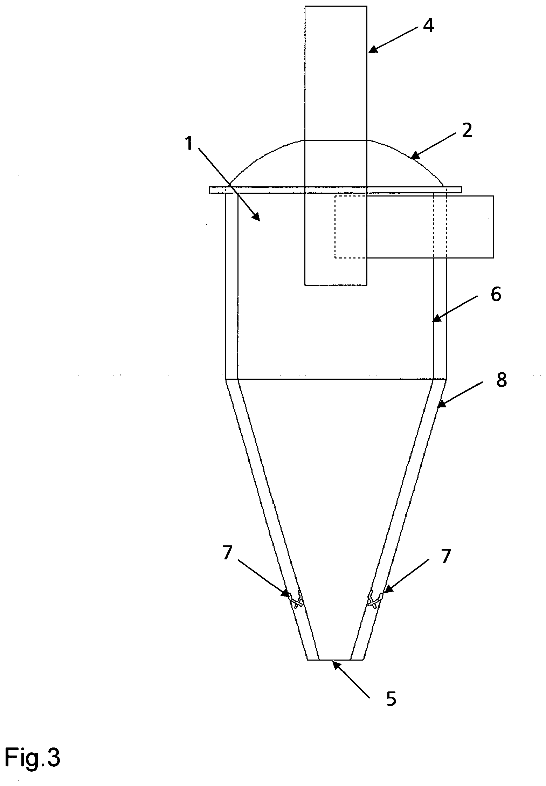

Das Ausführungsbeispiel nach Fig. 3 unterscheidet sich von dem Fliehkraftabscheider 1 nach Fig. 1 und 2 bezüglich der Dämpfungsmittel 7. Nach Fig. 3 ist das als Federelement ausgebildete Dämpfungsmittel zweiteilig 11, 12 ausgebildet.

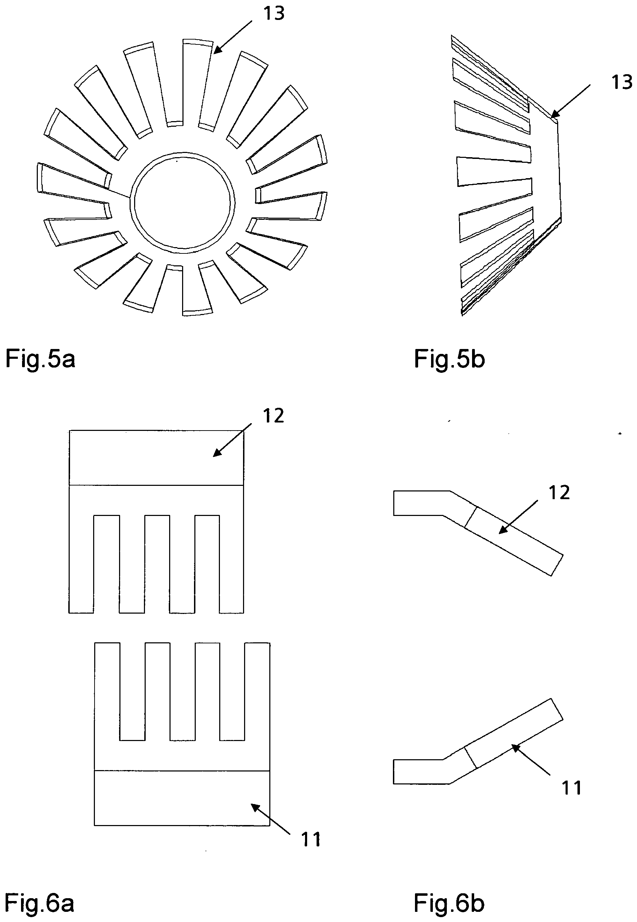

Ein erster Teil 12 des Federelements ist an der Innenwandung des Gehäuses 2 des Fliehkraftabscheiders 1 angeordnet und ein zweiter Teil 11 des Federelements ist an dem Verschleißhemd 6 angeordnet, wobei der erste 12 und zweite 11 Teil des Federelements im eingebauten Zustand zusammenwirken. In dem dargestellten Ausführungsbeispiel sind der erste 12 und zweite 11 Teil des Federelements kammartig ausgebildet, wobei die Kammelemente im eingebauten Zustand ineinandergreifen und dadurch die Federwirkung erzielen. Detailansichten des Dämpfungsmittels 7 nach Fig. 3 sind in den Figuren 6a und 6b dargestellt.

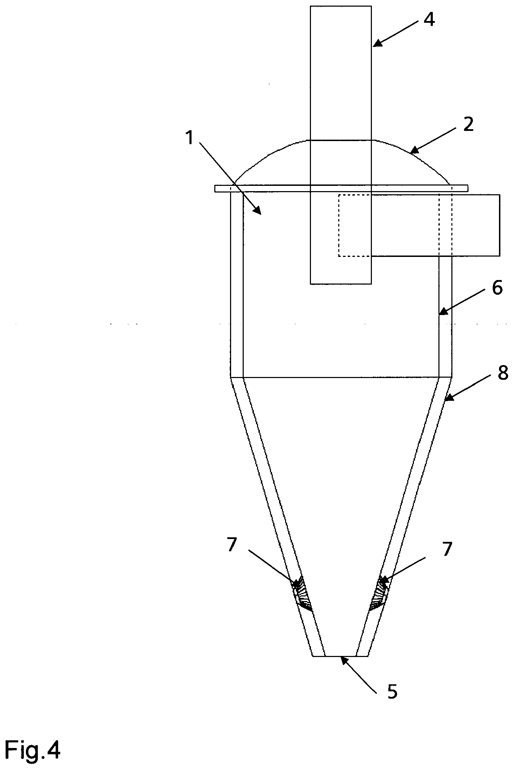

Bei dem in Fig. 4 dargestellten Ausführungsbeispiel der Erfindung ist das Dämpfungsmittel als halbkugelförmige gekrümmte Zahnscheibe 13 ausgebildet. Eine solche halbkugelförmige gekrümmte Zahnscheibe 13 ist beispielsweise aus einer Zahnscheibe herstellbar, bei welcher die Zähne so gebogen werden, dass die Zahnscheibe vorzugsweise eine halbkugelförmige Form aufweist. Dabei besteht die halbkugelförmige gekrümmte Zahnscheibe 13 vorzugsweise aus Federstahl. Dies hat die Vorteile, dass die halbkugelförmige gekrümmte Zahnscheibe 13 einfach herstellbar ist, sehr robust ist und einfach montierbar ist, insbesondere muss eine solche halbkugelförmige gekrümmte Zahnscheibe 13 nur an der Wandung des Fliehkraftabscheiders 1 oder des Verschleißhemdes 6 befestigt werden. Detailansichten der halbkugelförmigen gekrümmten Zahnscheibe 13 sind in den Figuren 5a und 5b dargestellt.

### Bezugszeichenliste

- 1: Fliehkraftabscheider
- 2: Gehäuse
- 3: Eintrittsöffnung
- 4: Austrittsöffnung
- 5: Entnahmeöffnung
- 6: Verschleißhemd
- 7: Dämpfungsmittel
- 8: Konischer Bereich
- 9: Halteplatte
- 10: Einsatzbereich
- 11: Zweiter Teil des Federelements
- 12: Erster Teil des Federelements
- 13: halbkugelförmige gekrümmte Zahnscheibe

## Patentansprüche

1. Fliehkraftabscheider (1) zur Reinigung eines Gasstromes von mitgeführten Fremdstoffen, umfassend:
- eine Eintrittsöffnung (3), zur Einleitung des zu reinigenden Gasstromes,
- eine Austrittsöffnung (4), zur Ableitung des gereinigten Gasstromes,
- eine Entnahmeöffnung (5) für die aus dem Gasstrom abgetrennten Fremdstoffe, und
- ein Verschleißhemd (6), welches im Inneren des Fliehkraftabscheiders (1) so angeordnet ist, dass es zumindest teilweise die Innenwandung des Fliehkraftabscheiders (1) vor Beschädigungen durch die im Gasstrom enthaltenen Fremdstoffe schützt,
**dadurch gekennzeichnet, dass**
zwischen der Innenwandung des Fliehkraftabscheiders (1) und des Verschleißhemdes (6) wenigstens ein als Federelement ausgebildetes Dämpfungsmittel (7) angeordnet ist,
wobei das Dämpfungsmittel (7) Relativbewegungen zwischen der Innenwandung des Fliehkraftabscheiders (1) und dem Verschleißhemd (6) ausgleicht.

2. Fliehkraftabscheider (1) nach Anspruch 1,
**dadurch gekennzeichnet, dass**
das Verschleißhemd (6) in einem oberen Bereich fest mit der Innenwandung des Fliehkraftabscheiders (1) verbunden ist und in einem unteren Bereich mittels des Dämpfungsmittels (7) gehaltert ist.

3. Fliehkraftabscheider (1) nach Anspruch 1 oder 2,
**dadurch gekennzeichnet, dass**
das Verschleißhemd (6) mittels des Dämpfungsmittels (7) in dem Fliehkraftabscheider (1) zentriert ist.

4. Fliehkraftabscheider (1) nach einem der Ansprüche 1 bis 3,
**dadurch gekennzeichnet, dass**
das Federelement aus Federstahl besteht.

5. Fliehkraftabscheider (1) nach einem der Ansprüche 1 bis 4,
**dadurch gekennzeichnet, dass**
das Federelement mehrteilig ausgebildet ist, vorzugsweise zweiteilig (11, 12).

6. Fliehkraftabscheider (1) nach Anspruch 5,
**dadurch gekennzeichnet, dass**
ein erster Teil (12) des Federelements an der Innenwandung des Fliehkraftabscheiders (1) angeordnet ist und
ein zweiter Teil (11) des Federelements an dem Verschleißhemd (6) angeordnet ist, wobei der erste (12) und zweite (11) Teil des Federelements im eingebauten Zustand zusammenwirken.

7. Fliehkraftabscheider (1) nach Anspruch 5 oder 6,
**dadurch gekennzeichnet, dass**
wenigstens ein Teil (11, 12) des Federelements kammartig ausgebildet ist und mit wenigstens einem Vorsprung des anderen Teils (12, 11) des Federelements im eingebauten Zustand zusammenwirkt.

8. Fliehkraftabscheider (1) nach einem der Ansprüche 1 bis 4,
**dadurch gekennzeichnet, dass**
das Federelement als gekrümmte Zahnscheibe (13) ausgebildet ist, vorzugsweise als halbkugelförmige Zahnscheibe.

## Claims

1. A centrifugal separator (1) for cleaning accompanying foreign particles in a flow of gas, comprising:
- an inlet opening (3) for introducing the flow of gas to be cleaned,
- an outlet opening (4) for discharging the cleaned flow of gas,
- a discharge opening (5) for the foreign particles separated from the flow of gas, and
- a wear shirt (6), which is arranged inside the centrifugal separator (1) in such a way that it at least partially protects the inner wall of the centrifugal separator (1) from damage by the foreign particles contained in the flow of gas,
**characterised in that**
at least one damping means (7) designed as a spring element is arranged between the inner wall of the centrifugal separator (1) and the wear shirt (6),
wherein the damping means (7) compensates relative movements between the inner wall of the centrifugal separator (1) and the wear shirt (6).

2. Centrifugal separator (1) according to claim 1,
**characterised in that**
the wear shirt (6) is firmly connected in an upper region to the inner wall of the centrifugal separator (1) and is supported in a lower region by means of the damping means (7).

3. Centrifugal separator (1) according to claim 1 or 2,
**characterised in that**
the wear shirt (6) is centered in the centrifugal separator (1) by means of the damping means (7).

4. Centrifugal separator (1) according to any of claims 1 to 3,
**characterised in that**
the spring element consists of spring steel.

5. Centrifugal separator (1) according to any of claims 1 to 4,
**characterised in that**
the spring element is designed in several parts, preferably in two parts (11, 12).

6. Centrifugal separator (1) according to claim 5,
**characterised in that**
a first part (12) of the spring element is arranged on the inner wall of the centrifugal separator (1), and
a second part (11) of the spring element is arranged on the wear shirt (6), wherein the first (12) and second (11) parts of the spring element cooperate in the installed state.

7. Centrifugal separator (1) according to claim 5 or 6,
**characterised in that**
at least one part (11, 12) of the spring element is of comb-like design and cooperates with at least one projection of the other part (12, 11) of the spring element in the installed state.

8. Centrifugal separator (1) according to any of claims 1 to 4,
**characterised in that**
the spring element is designed as a curved toothed disc (13), preferably as a hemispherical toothed disc.

## Revendications

1. Séparateur centrifuge (1) destiné au nettoyage de particules étrangères d'accompagnement dans un flux de gaz, comprenant :
- un orifice d'entrée (3) permettant d'introduire le flux de gaz à nettoyer,
- un orifice de sortie (4) permettant d'évacuer le flux de gaz nettoyé,
- un orifice d'évacuation (5) pour les particules étrangères séparées du flux de gaz, et
- une chemise d'usure (6), qui est disposée à l'intérieur du séparateur centrifuge (1) de manière à protéger au moins partiellement la paroi interne du séparateur centrifuge (1) contre les dommages causés par les particules étrangères contenues dans le flux de gaz,
**caractérisé en ce que**
au moins un moyen d'amortissement (7) conçu sous la forme d'un élément de ressort est disposé entre la paroi interne du séparateur centrifuge (1) et la chemise d'usure (6),
dans lequel le moyen d'amortissement (7) compense les mouvements relatifs entre la paroi interne du séparateur centrifuge (1) et la chemise d'usure (6).

2. Séparateur centrifuge (1) selon la revendication 1,
**caractérisé en ce que**
la chemise d'usure (6) est solidement reliée dans une région supérieure à la paroi interne du séparateur centrifuge (1) et est supportée dans une région inférieure grâce au moyen d'amortissement (7).

3. Séparateur centrifuge (1) selon la revendication 1 ou 2,
**caractérisé en ce que**
la chemise d'usure (6) est centrée dans le séparateur centrifuge (1) grâce au moyen d'amortissement (7).

4. Séparateur centrifuge (1) selon l'une quelconque des revendications 1 à 3, **caractérisé en ce que**
l'élément de ressort est constitué d'un acier à ressorts.

5. Séparateur centrifuge (1) selon l'une quelconque des revendications 1 à **4**, **caractérisé en ce que**
l'élément de ressort est conçu en plusieurs parties, de préférence en deux parties (11, 12).

6. Séparateur centrifuge (1) selon la revendication 5,
**caractérisé en ce que**
une première partie (12) de l'élément de ressort est disposée sur la paroi interne du séparateur centrifuge (1), et
une seconde partie (11) de l'élément de ressort est disposée sur la chemise d'usure (6), dans lequel les première (12) et seconde (11) parties de l'élément de ressort coopèrent à l'état monté.

7. Séparateur centrifuge (1) selon la revendication 5 ou 6,
**caractérisé en ce que**
au moins une partie (11, 12) de l'élément de ressort est en forme de peigne et coopère avec au moins une saillie de l'autre partie (12, 11) de l'élément de ressort à l'état monté.

8. Séparateur centrifuge (1) selon l'une quelconque des revendications 1 à 4, **caractérisé en ce que**
l'élément de ressort est conçu sous la forme d'un disque denté incurvé (13), de préférence sous la forme d'un disque denté hémisphérique.
